# EUROPÄISCHE PATENTSCHRIFT

(11) **EP 2 848 502 B1**
(45) Veröffentlichungstag und Bekanntmachung des Hinweises auf die Patenterteilung: **29.11.2017**
(21) Anmeldenummer: 14183110.7
(22) Anmeldetag: 02.09.2014
(51) Int. Cl.: B62D 53/00

(54) **Routenzug sowie Steuerungsverfahren für Routenzug**
Route train and method for controlling a route train
Chariot tracteur et procédé de commande pour chariot tracteur

(30) Priorität: 17.09.2013 DE 102013110211
(43) Veröffentlichungstag der Anmeldung: 18.03.2015
(73) Patentinhaber: STILL GmbH, 22113 Hamburg (DE)
(72) Erfinder: Krüger-Basjmeleh, Tino, 25469 Halstenbek (DE); Viereck, Volker, 23898 Kühsen (DE)
(74) Vertreter: Patentship Patentanwaltsgesellschaft mbH

(56) Entgegenhaltungen:
- EP-A1- 2 573 040
- EP-A2- 2 492 173
- DE-A1- 10 131 935
- DE-U1-202012 002 489

## Beschreibung

Die Erfindung betrifft einen Anhänger für einen Routenzug. Insbesondere betrifft die Erfindung einen Anhänger für einen Routenzug mit einer Zugvorrichtung, etwa einer frontseitigen Zugdeichsel und einer rückseitigen Anhängerkupplung, sowie einer Signalverbindung zur Übermittlung von Daten an einen Schlepper und/oder andere Anhänger. Weiterhin betrifft die Erfindung einen entsprechenden Routenzug sowie ein Steuerungsverfahren für einen Routenzug.

Moderne Produktionsabläufe machen zunehmend flexiblere Materialflusskonzepte erforderlich. Für die zeit- und platzsparende Versorgung von Arbeitsplätzen in der Produktion mit Fertigungsteilen, Zuliefererkomponenten und Halbzeugen werden häufig Routenzugsysteme eingesetzt. Diese Routenzüge, die auch als Schlepperzug bezeichnet werden, bestehen dabei aus einem Schleppfahrzeug bzw. Schlepper und mindestens einem Anhänger, jedoch im Regelfall mehreren Anhängern. Die Anhänger weisen üblicherweise eine Anhängerdeichsel auf, mit der sie in eine Kupplung des vorauslaufenden Fahrzeuges eingehängt sind.

Als Transportmittel werden Routenzüge vor allem auch zur Fließbandbestückung, in Logistikzentren, zur Kommissionierung, in Flughäfen oder Bahnhöfen im Terminalbetrieb, beispielsweise zur Sammlung von Kofferkulis, bzw. auch im Güterbahnhofbetrieb eingesetzt. Bekannt ist bei Routenzügen, Anhänger mit einem hydraulisch oder pneumatisch anhebbaren Lastträger einzusetzen, der auf Rollen verfahrbare Ladungsträger unterschiedliche Art und Form sowie mit unterschiedlichen Abmessungen aufnehmen kann, indem diese Ladungsträger angehoben werden.

Dabei sind verschiedene Arten des Grades der Automatisierung bekannt. So können neben der zuvor beschriebenen vollautomatischen Aufnahme von Lastenträgern Routenzüge manuel be- und entladen bzw. bestückt werden. Auch kann das Fahren des Routenzuges mit einem Fahrer oder autonom, d.h. vollautomatisch und fahrerlos, erfolgen.

Bereits bei den zuvor beschriebenen Routenzügen mit anhebbarem Lastträger ergibt sich eine Vielzahl von Möglichkeiten. Die Ladungsträger, die ebenerdig in den Lastträger eingeschoben werden, können Viertel-, Halb- und Vollpaletten mit verschiedenen Abmessungen, oder auch Rollgitterwagen sowie Regalwagen sein. Dabei können die Ladungsträger durch den Lastenträger vollständig angehoben werden oder in anderen Ausführungsformen soweit angehoben werden, dass nur bestimmte Rollen, beispielsweise größer ausgeführte Rollen, noch Kontakt mit dem Boden haben. An einem Zielpunkt des Transportes können durch eine Person die sich automatisch absenkenden Ladungsträger, die dadurch von dem Lastenträger freikommen, aus dem Routenzug gezogen werden und an die jeweiligen Arbeitsplätze gerollt werden. Die Ladungsträger werden dann gegen leere Ladungsträger ausgetauscht. Abhängig von dem eingesetzten Schlepper und der Anhängelast sind Fahrgeschwindigkeiten bis zu 15km/h und Zuglängen von bis zu fünf Anhängern üblich.

Nachteilig bei diesem Stand der Technik ist, dass bei automatisierten Routenzügen ausschließlich vordefinierte Konfigurationen, d.h. starre Zusammenstellungen zwischen Schlepper und Typen von Anhängern in Bezug auf Länge, Breite, Höhe und Zahl der Anhänger eingesetzt werden können, da die Zahl der Anhänger und die Typen der Anhänger die Fahreigenschaften eines Routenzuges beeinflussen. So ist eine hundertprozentige Spurtreue der Anhänger zu dem voraus laufenden Anhänger bzw. dem Schlepper im Regelfall schon aus konstruktiven Gründen nicht gegeben und der erforderliche Überwachungsbereich auf Kollisionen bei automatisierten Fahrten hängt von den Typen und der Anzahl der Anhänger ab. Bekannte Typen von Anhängern sind Plattformwagen mit zwei Achsen bzw. sechs Rädern, Plattformwagen für das so genannte Picking, Kleinladungsträger-Anhänger (KLT) für eine Last bis zu 100 Kilo pro Bodenrolle sowie Anhänger als Doppeleintritt mit oder ohne Regale. Als Folge werden daher für den automatisierten Betrieb ausschließlich feste Schlepper-Anhängerkonfigurationen genutzt, wodurch die Flexibilität der Routenzüge erheblich eingeschränkt wird, beispielsweise im Falle von Sonderfahrten oder bei Wartungsfällen.

Denkbar wäre hier eine Anpassung der Steuerung, insbesondere des Schleppers bzw. der Fahrzeugsteuerung der Schlepper, durch eine manuelle Eingabe von Konfigurationsdaten der Anhänger vorzunehmen. Dadurch ergibt sich jedoch ein erhebliches Fehlerpotenzial.

Weiterhin können die Anhänger zusätzlich eigene Personenschutzanlagen aufweisen und es ist auch möglich, dass die transportierte Ware bzw. deren Ziel und/oder Ursprung analysiert werden soll. Über diese Funktionen liegen ebenfalls keine Informationen vor und diese können nicht berücksichtigt werden wenn neue Typen von Anhängern angehängt werden.

Die EP 2 573 040 A1 offenbart ein autonomes Fahrzeug, das einen Trolley mit einem RFID-Transponder aufnehmen kann, wobei der RFID-Transponder Informationen über das Ziel des Trolleys übermittelt.

Die EP 2 492 173 A2 offenbart einen Routenzug mit Anhängern, die jeweils eine Speichereinheit für die Abspeicherung eines Eigengewichtes aufweisen und dieses Eigengewicht an ein Schleppfahrzeug übermitteln können.

Die DE 101 31 935 A1 offenbart einen Sattelschlepperwagenzug mit einem verteilten Antriebssystem über alle Anhänger, bei dem die Zuglastgewichte zwischen den Anhängern erfasst und an das Zugfahrzeug übertragen werden.

Der vorliegenden Erfindung liegt die Aufgabe zugrunde, einen Anhänger für einen Routenzug, einen Routenzug sowie ein Verfahren zur Steuerung eines Routenzuges zur Verfügung zu stellen, die die zuvor genannten Nachteile vermeiden und mit denen flexibel Routenzüge, insbesondere autonome Routenzüge, mit unterschiedlichen Anhängern zusammengestellt werden können.

Diese Aufgabe wird durch einen Anhänger für einen Routenzug mit den Merkmalen des unabhängigen Patentanspruchs 1, durch einen Routenzug mit den Merkmalen des Patentanspruchs 10 und durch ein Steuerungsverfahren nach Anspruch 13 gelöst. Vorteilhafte Weiterbildungen werden in den Unteransprüchen angegeben.

Die Aufgabe wird erfindungsgemäß dadurch gelöst, dass bei einem Anhänger für einen Routenzug mit einer Zugvorrichtung, insbesondere einer frontseitigen Zugdeichsel und einer rückseitigen Anhängerkupplung, sowie einer Signalverbindung zur Übermittlung von Daten an einen Schlepper und/oder andere Anhänger, dem Anhänger eine Datenverarbeitungsvorrichtung zugeordnet ist, die über die Signalverbindung Parameterdaten des Anhängers übermitteln kann, wobei die Parameterdaten Abmessungen des Anhängers und/oder geometrische Fahreigenschaften wie Kurvenbahnen abhängig von einem Lenkwinkel der Zugdeichsel umfassen.

Dadurch erhält ein Schlepper, insbesondere eine Fahrzeugsteuerung eines autonomen Schleppers, Informationen über die Eigenschaften der in dem Routenzug befindlichen Anhänger. Insbesondere können die äußeren Maße mitgeteilt werden, aber auch für das Fahrverhalten in einem Routenzug relevante Eigenschaften. Hierzu gehört insbesondere die zu einer Schrägstellung der Zugdeichsel gehörige Bahnkurve, die ein gezogener Anhänger durchfährt. Dadurch kann die Fahrzeugsteuerung des Schleppers, insbesondere eines autonomen Schleppers, in Bezug auf erforderliche Überwachungsräume und Sicherheitsabstände angepasst werden. Es wird möglich, flexibel unterschiedliche Typen und Anzahlen von Anhängern zu benutzen. Insbesondere wird eine aufwändige manuelle Eingabe der Parameter der Anhänger vermieden. Es wird ein flexibler Einsatz möglich, bei einer gleichzeitigen Verringerung der Ausfallzeiten.

Die Parameterdaten können zur Verfügung stehende Informationen von Personenschutzeinrichtungen umfassen.

Vorteilhaft kann die Datenverarbeitungsvorrichtung die Parameterdäten an einen vorauslaufenden Anhänger übermitteln.

In einer vorteilhaften Weiterbildung kann die Datenverarbeitungsvorrichtung die Parameterdaten zusammen mit von nachlaufenden Anhängern empfangenen Parameterdaten übermitteln.

Die Parameterdaten können von Sensoren erfasste Werte enthalten.

Dadurch kann gegebenenfalls auch die Art und Größe einer Ware sowie deren Position auf dem Anhänger erfasst werden. Dies kann insbesondere relevant werden, wenn transportierte Waren über die Außenumrisse des Anhängers hinaus stehen und bei Sicherheitsräumen bzw. Sicherheitsabständen berücksichtigt werden müssen.

In einer weiteren Ausgestaltung können die Parameterdaten Informationen über zu transportierenden Waren enthalten, insbesondere Angaben zu Zielort oder Herkunftsort der Waren.

Dadurch besteht die Möglichkeit, einen einzelnen Anhänger oder ganzen Routenzüge bereits zu beladen, bevor diese mit einem Schlepper gekuppelt sind. Indem die Informationen über anzufahrende Zielorte in den Parameterdaten hinterlegt sind, stehen diese einem Schlepper zur Verfügung, sobald der Routenzug komplett zusammengestellt wird. Ein Transport kann dann ohne weitere Wartezeit begonnen werden.

Vorteilhaft werden die Informationen über zu transportierende Waren von Erfassungsmitteln für Warenidentifikationsmittel, insbesondere RFID-Transponder, erfasst.

In einer günstigen Ausgestaltung ist die Datenverarbeitungsvorrichtung mit Haltemitteln an dem Anhänger befestigt, insbesondere durch eine über zumindest einen Teil des Anhängers stülpbare Hülle als Haltemittel.

Dies ermöglicht eine nachträgliche Ausrüstung von Anhängern mit einer Datenverarbeitungsvorrichtung und vereinfacht Nachrüstlösungen.

Die Signalverbindung kann eine drahtlose Verbindung sein.

Die Aufgabe wird auch gelöst durch einen Routenzug bestehend aus einem Schlepper mit einer Anhängerkupplung und einer Fahrzeugsteuerung sowie einer Signalverbindung zum Empfang von Daten der Anhänger sowie mindestens einem Anhänger, wir er zuvor beschrieben wurde.

Der Routenzug weist die bereits genannten Vorteile auf.

Die Signalverbindung kann über Steckverbindungen und Kabel durch den Routenzug geleitet sein.

Insbesondere ermöglicht eine solche über ein Kabel durch den Routenzug geleitete Signalverbindung es, einen letzten Anhänger des Routenzuges festzustellen, indem zum Beispiel erfasst wird ob eine hintere Steckverbindung belegt ist oder offen. Alternativ ist es auch denkbar, einen Abschlussstecker zu verwenden; durch den ein letzter Anhänger markiert wird.

Weiterhin wird die Aufgabe gelöst durch ein Steuerungsverfahren eines zuvor beschriebenen Routenzuges, wobei beginnend bei einem letzten Anhänger in dem Routenzug jeder Anhänger die Parameterdaten der nachlaufenden Anhänger zusammen mit den eigenen Parameterdaten an den vorauslaufenden Anhänger übermittelt, bis die Fahrzeugsteuerung des Schleppers alle Parameterdaten aller Anhänger empfängt.

Die Übermittlung erfolgt dadurch von "hinten nach vorne".

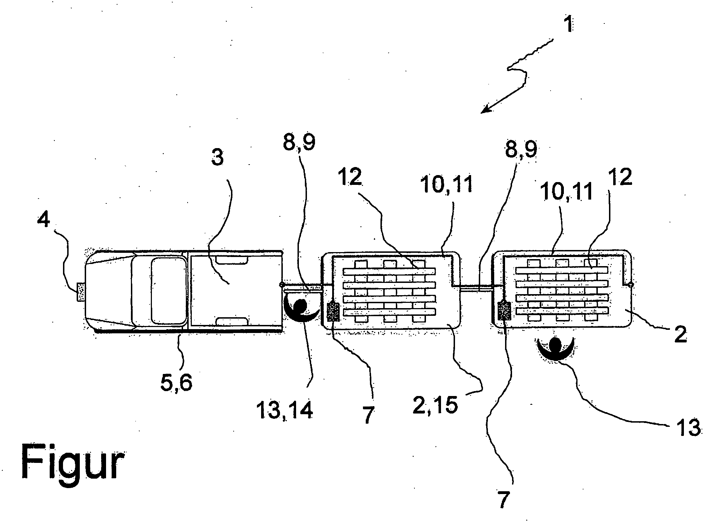

Weitere Vorteile und Einzelheiten der Erfindung werden anhand des in der schematischen Figur dargestellten Ausführungsbeispiels näher erläutert. Hierbei zeigt die Figur einen erfindungsgemäßen Routenzug 1 in Aufsicht. Der Schlepper 3 weist an seiner Frontseite einen zusätzlichen Laserscanner 4 auf, der für die Erfindung nicht erforderlich ist und mit dem der Raum vor dem Schlepper 3 auf Hindernisse wie etwa Personen überwacht werden kann. Ebenso weist der Schlepper 3 für die Erfindung nicht unbedingt erforderliche seitliche Schaltschutzleisten 5 als Bumper 6 auf, durch die bei Kontakt mit einem Hindernis eine Notabschaltung des autonom fahrenden Schleppers 3 erfolgen kann.

Die zwei Anhänger 2 weisen jeweils eine Zugvorrichtung 8 bestehend aus einer Zugdeichsel 9 und einer nicht näher dargestellten Anhängerkupplung auf. Die Anhängerkupplung kann dabei in verschiedenen Ausführungen, die nach dem Stand der Technik bekannt sind, gestaltet sein, wie Kugelkopf, Zugbolzen für Zugösen und Zughaken. Weiter weist jeder Anhänger 2 eine Datenverarbeitungsvorrichtung 7 auf, die über eine Signalverbindung 10 Parameterdaten des Anhängers 2 an den jeweils vorauslaufenden Anhänger 2 bzw. eine Fahrzeugsteuerung des Schleppers 3 übertragen kann. Dabei ist die Signalverbindung 10 mithilfe von Kabeln 11 aufgebaut, die zwischen den Anhängern über nicht dargestellte Steckverbindungen verbunden sind. Dadurch kann das Fahrverhalten des autonom fahrenden Schleppers 3 an unterschiedliche Typen von Anhängern 2 angepasst werden bzw. es können die erforderlichen Sicherheitsabstände und Sicherheitsräume entsprechend eingestellt werden.

Weiterhin können auch Signale von Personenschutzeinrichtungen der Anhänger 2 und/oder Informationen über die Ausstattung der Anhänger 2 mit solchen Personenschutzeinrichtungen als Parameterdaten übertragen werden.

Auf den Anhängern 2 werden auf Paletten 12 Waren transportiert. Wenn die Anhänger 2 durch Personen 13 be- oder entladen werden und nach Beendigung dieser Tätigkeit sich noch eine Person 14 in einem Zwischenraum im vorliegenden Fall zwischen dem Schlepper 3 als vorausfahrenden Fahrzeug und einem ersten Anhänger 15 befindet, so löst die Personschutzvorrichtung des Anhängers 15 aus und veranlasst eine Notabschaltung des autonomen Schleppers 3.

## Patentansprüche

1. Anhänger für einen Routenzug (1) mit einer Zugvorrichtung (8), insbesondere einer frontseitigen Zugdeichsel (9) und einer rückseitigen Anhängerkupplung, sowie einer Signalverbindung (10) zur Übermittlung von Daten an einen Schlepper und/oder andere Anhänger,
**dadurch gekennzeichnet,**
**dass** dem Anhänger (2) eine Datenverarbeitungsvorrichtung (7) zugeordnet ist, die über die Signalverbindung(10) Parameterdaten des Anhängers (2) übermitteln kann, wobei die Parameterdaten Abmessungen des Anhängers (2) und/oder geometrische Fahreigenschaften wie Kurvenbahnen abhängig von einem Lenkwinkel der Zugdeichsel (9) umfassen.

2. Anhänger nach Anspruch 1,
**dadurch gekennzeichnet,**
**dass** die Parameterdaten zur Verfügung stehende Informationen von Personenschutzeinrichtungen umfassen.

3. Anhänger nach Anspruch 1 oder 2,
**dadurch gekennzeichnet,**
**dass** die Datenverarbeitungsvorrichtung (7) die Parameterdaten an einen vorauslaufenden Anhänger (15) übermitteln kann.

4. Anhänger nach einem der Ansprüche 1 bis 3,
**dadurch gekennzeichnet,**
**dass** die Datenverarbeitungsvorrichtung (7) die Parameterdaten zusammen mit von nachlaufenden Anhängern empfangenen Parameterdaten übermitteln kann.

5. Anhänger nach einem der Ansprüche 1 bis 4,
**dadurch gekennzeichnet,**
**dass** die Parameterdaten von Sensoren erfasste Werte enthalten.

6. Anhänger nach einem der Ansprüche 1 bis 5,
**dadurch gekennzeichnet,**
**dass** die Parameterdaten Informationen über zu transportierenden Waren enthalten, insbesondere Angaben zu Zielort oder Herkunftsort der Waren.

7. Anhänger nach Anspruch 6,
**dadurch gekennzeichnet,**
**dass** die Informationen über zu transportierende Waren von Erfassungsmitteln für Warenidentifikationsmittel, insbesondere RFID-Transponder, erfasst werden.

8. Anhänger nach einem der Ansprüche 1 bis 7,
**dadurch gekennzeichnet,**
**dass** die Datenverarbeitungsvorrichtung (7) mit Haltemitteln an dem Anhänger befestigt ist, insbesondere durch eine über zumindest einen Teil des Anhängers (2) stülpbare Hülle als Haltemittel.

9. Anhänger nach einem der Ansprüche 1 bis 8,
**dadurch gekennzeichnet,**
**dass** die Signalverbindung eine drahtlose Verbindung ist.

10. Routenzug bestehend aus einem Schlepper (3) mit einer Anhängerkupplung und einer Fahrzeugsteuerung sowie einer Signalverbindung (10) zum Empfang von Daten der Anhänger (2) sowie mindestens einem Anhänger (2) nach einem der Ansprüche 1 bis 9.

11. Routenzug nach Anspruch 10,
**dadurch gekennzeichnet,**
**dass** die Signalverbindung (10) über Steckverbindungen und Kabel (11) durch den Routenzug (1) geleitet ist.

12. Routenzug nach Anspruch 10 oder 11,
**dadurch gekennzeichnet,**
**dass** der Schlepper ein autonom fahrender Schlepper ist.

13. Steuerungsverfahren eines Routenzuges (1) nach Anspruch 10, wobei beginnend bei einem letzten Anhänger (2) in dem Routenzug (1) jeder Anhänger (2) die Parameterdaten der nachlaufenden Anhänger (2) zusammen mit den eigenen Parameterdaten an den vorauslaufenden Anhänger (15) übermittelt, bis die Fahrzeugsteuerung des Schleppers (3) alle Parameterdaten aller Anhänger (2) empfängt.

## Claims

1. Trailer for a tugger train (1) having a towing device (8), in particular a front-side tow bar (9) and a rear-side trailer coupling, as well as a signal connection (10) for transmitting data to a tractor and/or to other trailers,
**characterized**
**in that** the trailer (2) is assigned a data processing device (7) which can transmit parameter data of the trailer (2) via the signal connection (10), wherein the parameter data comprises dimensions of the trailer (2) and/or geometric driving properties such as curved paths as a function of a steering angle of the tow bar (9).

2. Trailer according to Claim 1,
**characterized**
**in that** the parameter data comprises available information from passenger protection devices.

3. Trailer according to Claim 1 or 2,
**characterized**
**in that** the data processing device (7) can transmit the parameter data to a trailer (15) running ahead.

4. Trailer according to one of Claims 1 to 3,
**characterized**
**in that** the data processing device (7) can transmit the parameter data together with parameter data received from trailers running behind.

5. Trailer according to one of Claims 1 to 4,
**characterized**
**in that** the parameter data contains values detected by sensors.

6. Trailer according to one of Claims 1 to 5,
**characterized**
**in that** the parameter data contains information about goods to be transported, in particular specifications about the destination or origin of the goods.

7. Trailer according to Claim 6,
**characterized**
**in that** the information about goods to be transported is acquired from acquisition means or goods identification means, in particular RFID transponders.

8. Trailer according to one of Claims 1 to 7,
**characterized**
**in that** the data processing device (7) is attached to the trailer by securing means, in particular by means of a sleeve which can be folded over at least part of the trailer (2) as a securing means.

9. Trailer according to one of Claims 1 to 8,
**characterized**
**in that** the signal connection is a wireless connection.

10. Tugger train composed of a tractor (3) with a trailer coupling and a vehicle controller as well as a signal connection (10) for receiving data of the trailers (2) and at least one trailer (2) according to one of Claims 1 to 9.

11. Tugger train according to Claim 10,
**characterized**
**in that** the signal connection (10) is routed through the tugger train (1) by means of plug-type connections and cables (11).

12. Tugger train according to Claim 10 or 11,
**characterized**
**in that** the tractor is an autonomously driving tractor.

13. Control method of a tugger train (1) according to Claim 10, wherein starting at the last trailer (2) in the tugger train (1) each trailer (2) transmits the parameter data of the trailers (2) running behind together with its own parameter data to the trailer (15) running ahead, until the vehicle controller of the tractor (3) receives all the parameter data of all the trailers (2).

## Revendications

1. Remorque pour un train routier (1) comprenant un dispositif de remorquage (8), notamment une flèche d'attelage côté avant (9) et un attelage de remorque côté arrière, ainsi qu'une liaison de signal (10) destinée à communiquer des données à un tracteur et/ou à une remorque,
**caractérisée en ce**
**qu'**un dispositif de traitement de données (7) est associé à la remorque (2), lequel peut communiquer des données de paramètres de la remorque (2) par le biais de la liaison de signal (10), les données de paramètres comprenant les dimensions de la remorque (2) et/ou des propriétés de déplacement géométriques telles que des trajectoires courbes en fonction d'un angle de braquage de la flèche d'attelage (9).

2. Remorque selon la revendication 1, **caractérisée en ce que** les données de paramètres comprennent des informations mises à disposition par des dispositifs de protection des personnes.

3. Remorque selon la revendication 1 ou 2,
**caractérisée en ce que** le dispositif de traitement de données (7) peut communiquer les données de paramètres à une remorque (15) qui précède.

4. Remorque selon l'une des revendications 1 à 3,
**caractérisée en ce que** le dispositif de traitement de données (7) peut communiquer les données de paramètres conjointement avec les données de paramètres reçues par les remorques qui suivent.

5. Remorque selon l'une des revendications 1 à 4,
**caractérisée en ce que** les données de paramètres contiennent des valeurs collectées par des capteurs.

6. Remorque selon l'une des revendications 1 à 5,
**caractérisée en ce que** les données de paramètres contiennent des informations à propos des marchandises à transporter, notamment des indications à propos du lieu de destination ou du lieu d'origine des marchandises.

7. Remorque selon la revendication 6, **caractérisée en ce que** les informations à propos des marchandises à transporter sont acquises par des moyens d'acquisition pour des moyens d'identification de marchandises, notamment un transpondeur RFID.

8. Remorque selon l'une des revendications 1 à 7,
**caractérisée en ce que** le dispositif de traitement de données (7) est fixé à la remorque par des moyens de maintien, notamment par une enveloppe faisant office de moyen de maintien et qui peut être rabattue sur au moins une partie de la remorque (2).

9. Remorque selon l'une des revendications 1 à 8,
**caractérisée en ce que** la liaison de signal est une liaison sans fil.

10. Train routier constitué d'un tracteur (3) comprenant un attelage de remorque et une commande de véhicule ainsi qu'une liaison de signal (10) destinée à recevoir des données de la remorque (2), ainsi que d'au moins une remorque (2) selon l'une des revendications 1 à 9.

11. Train routier selon la revendication 10,
**caractérisé en ce que** la liaison de signal (10) est conduite à travers le train routier (1) par le biais de connecteurs et de câbles (11).

12. Train routier selon la revendication 10 ou 11,
**caractérisé en ce que** le tracteur est un tracteur à déplacement autonome.

13. Procédé de commande d'un train routier (1) selon la revendication 10, chaque remorque (2), en commençant par la dernière remorque (2) dans le train routier (1), communiquant les données de paramètres de la remorque qui suit (2) conjointement avec ses propres données de paramètres à la remorque qui précède (15), jusqu'à ce que la commande de véhicule du tracteur (3) reçoive toutes les données de paramètres de toutes les remorques (2).
